(19) Europäisches Patentamt / European Patent Office / Office européen des brevets

(11) **EP 2 076 089 B1**

(12) **EUROPEAN PATENT SPECIFICATION**

(45) Date of publication and mention
of the grant of the patent:
**31.08.2011 Bulletin 2011/35**

(51) Int Cl.:
*H04W 76/04* (2009.01)

(21) Application number: **07291620.8**

(22) Date of filing: **26.12.2007**

(54) **Method of controlling operation of a communication device, a communication device and a wireless communication system**

Verfahren zur Steuerung des Betriebs einer Kommunikationsvorrichtung, Kommunikationsvorrichtung und drahtloses Kommunikationssystem

Procédé de contrôle du fonctionnement d'un dispositif de communication, dispositif de communication, et système de communication sans fil

(84) Designated Contracting States:
**AT BE BG CH CY CZ DE DK EE ES FI FR GB GR HU IE IS IT LI LT LU LV MC MT NL PL PT RO SE SI SK TR**

(43) Date of publication of application:
**01.07.2009 Bulletin 2009/27**

(73) Proprietor: **Motorola Mobility, Inc.**
**Libertyville, IL 60048 (US)**

(72) Inventors:
• **Baglin, Matthieu**
**31100 Toulouse (FR)**
• **Ulmer, Lionel**
**31000 Toulouse (FR)**

(74) Representative: **Cross, Rupert Edward Blount**
**Boult Wade Tennant**
**Verulam Gardens**
**70 Gray's Inn Road**
**London WC1X 8BT (GB)**

(56) References cited:
**EP-A- 1 376 950     EP-A- 1 379 033**

• **"3rd Generation Partnership Project; Technical Specification Group GSM/EDGE Radio Access Network; General Packet Radio Service (GPRS); Overall Description of the GPRS Radio interface; Stage 2 (Release 7)" INTERNET CITATION, [Online] 1 November 2006 (2006-11-01), pages 1-71, XP002481188 Retrieved from the Internet: URL:http://www.3gpp.org/ftp/Specs/html-inf o/ 43064.htm> [retrieved on 2008-05-20]**
• **SIEMENS: "Early TBF establishment" INTERNET CITATION, [Online] XP002375228 Retrieved from the Internet: URL:http://www.3gpp.org/ftp/tsg_ geran/TSG_ GERAN/GERAN_27_Atlanta/Docs> [retrieved on 2006-03-31]**

**Description**

Field of the Invention

This invention relates to a method of controlling operation of a communication device, a communication device, and a wireless communication system and particularly with the communication device being capable of operating in an extended Temporary Block Flow (TBF) mode.

Background of the Invention

Wireless communication systems, for example cellular or private mobile radio (PMR) communication systems, typically provide for radio communication links to be arranged between a wireless communication network comprising a plurality of base stations (BSs) and a plurality of communication devices, often termed mobile stations (MSs). The MS may be a portable or mobile telephone, a Personal Digital Assistant (PDA), a wireless video or multimedia device, a portable computer, or the like.

The most ubiquitous 2nd generation cellular communication system is the Global System for Mobile communication (GSM). In order to enable data to be transferred at much higher data rates than the rates available under GSM, a number of enhancements and additions have been introduced to the GSM communication system. One such enhancement being the General Packet Radio System (GPRS) which uses packet switched data rather than circuit switched data and so makes much more efficient use of the available capacity. The GPRS system has been standardised as an add-on to an existing GSM communication system by ETSI originally and subsequently by the 3rd Generation Partnership Project (3GPP).

As with GSM, GPRS includes different layers according to the OSI model. Layer 1 concerns the physical link between the MS and the BS. Layer 2 includes the Radio Link Control (RLC) and Medium Access Control (MAC) layers which organise the logical links between the MS and the BS, and a Logical Link Layer (LLC). The RLC/MAC layers control the radio link access and organise the logical channels that route the data to and from the MS. The LLC layer formats the data frames and is used to link the elements of the core network to the MS.

Since GPRS is an evolution of GSM, it is also a TDMA system. In a GPRS system, traffic information, such as speech, video, SMS, etc and control information for controlling signalling between the MS and BS is communicated between a MS and a BS via physical channels defined as a sequence of radio frequency channels and TDMA time slots. The physical channel dedicated to packet data traffic is called a Packet Data Channel (PDCH). Several logical channels are mapped into the physical channels PDCH. Traffic messages are transmitted on a logical dedicated packet data traffic channel (PDTCH) and control messages are transmitted normally on logical control channels, such as Common Control Channel (CCCH)-, Packet Common Control Channel (PCCCH), Packet Paging Channel (PPCH), Packet Broadcast Control Channel (PBCCH).

Eight time slots constitute one TDMA frame and these TDMA frames are combined to form a multi-frame comprising 52 TDMA frames that are transmitted repeatedly. The multi-frames are used in the implementation of the logical channels. The multi-frame is divided into 12 radio blocks (RLC/MAC blocks) of 4 consecutive TDMA frames. One radio block is needed to send one RLC/MAC frame.

In a packet switched system, such as a GPRS system, data is sent in packets which contain a source and destination address in order to be transported through the network. The GPRS network assigns resources (e.g. time slots) to a MS only for the time required to send or receive data during a Temporary Block Flow (TBF). Each RLC/MAC frame are scheduled on a radio block by radio block basis sot that several MSs can be multiplexed using the same timeslots for packet transfer.

A Temporary Block Flow (TBF) is a logical connection supporting data transmission on physical packet data channels between a transmitter (e.g. MS or network) and a receiver (e.g. network or MS). For a TBF, resources are allocated on one or several physical PDCH channels and comprise several RLC/MAC blocks conveying information. MAC blocks are used for allocating logical channels between MSs as well as for allocating the physical channel for the MS for receiving and transmitting data as required. RLC blocks are used for allocating resources upon request for packets to be transmitted to the network and for retransmission of incorrectly received blocks.

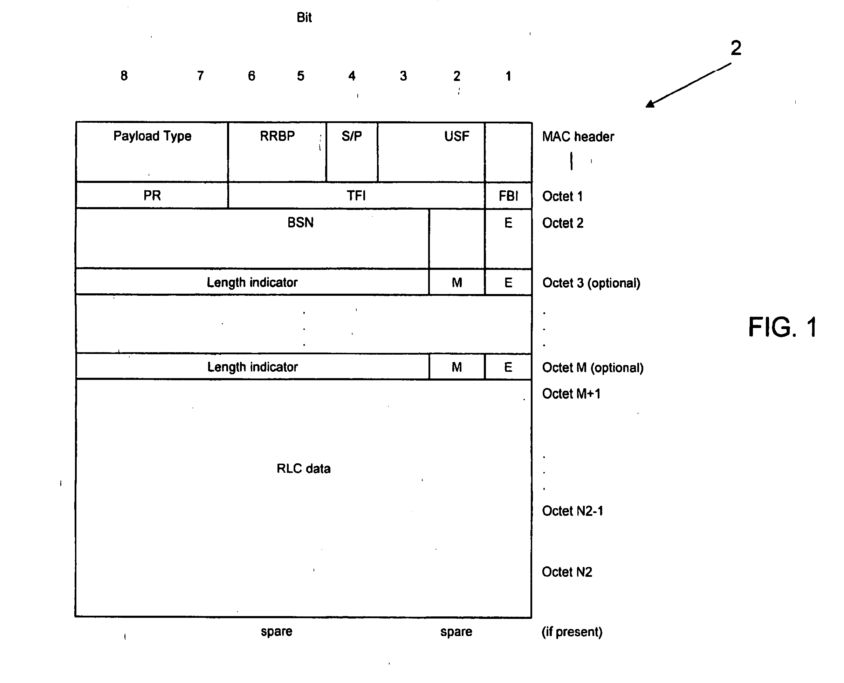

A GPRS or Enhanced GPRS (EGPRS) RLC data block, which is the part of a RLC/MAC block carrying user data or signalling data received from an upper layer, consists of an RLC/MAC header, an RLC data unit and spare bits. Different RLC/MAC block structures are defined for data transfers and for control message transfers. The RLC/MAC block structure for data transfers are different for GPRS and EGPRS, whereas the same RLC/MAC block structure is used for control message transfers. An example structure of a downlink RLC/MAC data block 2 is shown in FIG. 1. The RLC/MAC block 2 includes a MAC header which comprises an Uplink Stage Flag (USF) field, a Relative Reserved Block Period (RRBP) field and a Supplementary/Polling (S/P) field, a RLC data block comprising a Temporary Flow Identifier (TFI) field, a Final Block Indicator (FBI) field and a Block sequence Number (BSN) field linked to the RLC data being transferred in this block.

The BSN filed indicates the respective order of RLC data blocks belonging to each TBF mode. The USF field in the downlink direction defines the MS for which the next corresponding uplink block is allocated for data transmission. Each uplink or downlink TBF is allocated an individual Temporary Flow Identifier TFI. The FBI bit in the header is set to the value '0' unless the network wants to release the TBF, in which case the FBI bit is set to the value '1'. The S/P field is used by the network to indicate to the MS that it should answer to polling in the next RRBP block period.

When an MS or a network has data to be transmitted, an uplink or downlink TBF is established and is maintained during the data transmission until all the RLC/MAC blocks are transmitted or the receiver has reported all the transmitted blocks have been received at which point the TBF uplink or TBF downlink are released. Once a TBF uplink or TBF downlink has been released, for subsequent data transfers a new TBF has to be established. A downlink TBF is typically established using a paging procedure for TBF establishment using a paging subchannel on CCCH or PCCCH. An uplink TBF is typically established using channel requests on CCCH or packet channel requests on PCCCH. These procedures require several hundreds of milliseconds to be completed. Thus, establishing an uplink or downlink TBF requires time which increases the delay or latency in the transmission of data.

Many applications, such as Push-To-Talk, video conferencing or more generally Voice Over IP, require reduced latency to operate with a good quality of service. In order to reduce the latency involved in data transfers, a new concept known as extended TBF mode has been introduced into the GPRS standard: see 3GPP TS 44.060 - Radio Link Control/ Medium Access Control (RLC/MAC) protocol.

Extended TBF mode enables the TBFs to be maintained artificially in order to reduce the time to re-establish new TBFs. This new concept is referred to as extended uplink TBF mode and delayed release of downlink TBF mode.

3GPP TS 44.060 states that "In the extended uplink TBF mode, an uplink TBF may be maintained during temporary inactive periods, where the mobile station has no RLC information to send." An extended uplink TBF allows the MS to reuse the uplink TBF for subsequent data transfers without the need for TBF re-establishment, thereby reducing the latency involved between uplink data transfers. The network's support for extended uplink TBF is broadcast within a specific system information message. The MS must have explicit support for the extended uplink functionality to operate correctly. An extended uplink TBF parameter extends the time period before an uplink TBF is released.

A delayed release of the downlink TBF is when the release of the downlink TBF is delayed following the transmission of a final data block, rather than instantly releasing the TBF. A delayed downlink TBF allows re-use of a downlink TBF for subsequent data transfers without the need for TBF re-establishment, thereby reducing the latency involved between downlink transfers. Support for the use of delayed downlink TBF is not advertised to the MS and the MS does not require any changes to support delayed downlink TBF operation.

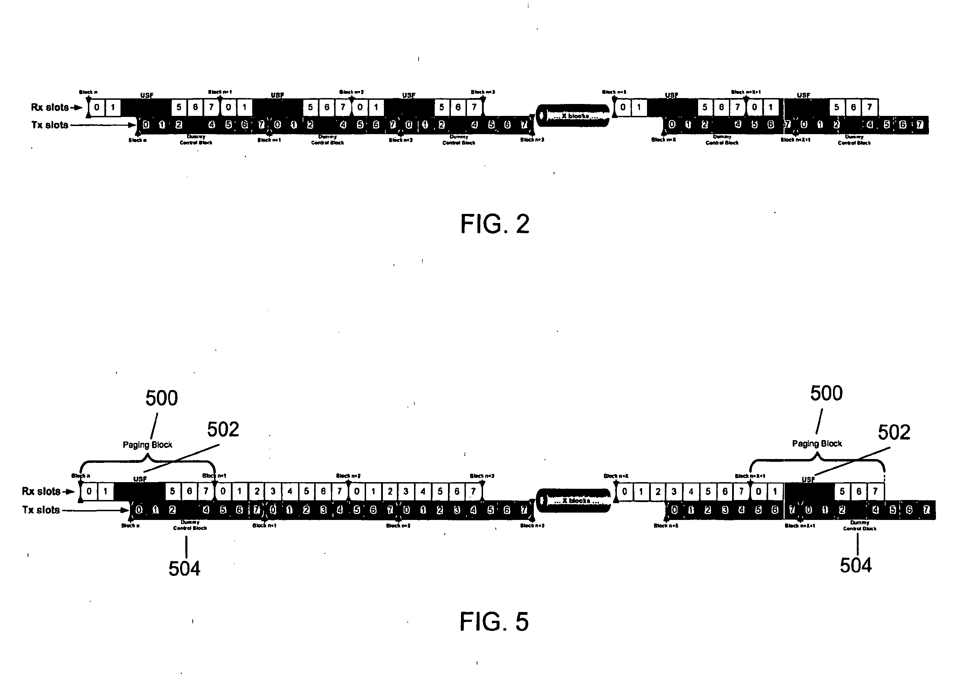

Although the extended TBF proposal reduces latency between data transfers, the current drain or power consumption in the MS is not negligible since the MS in extended TBF is required to monitor for and decode all the received RLC/MAC blocks conveying information to the MS and to send in response a dummy control block message to the network in an uplink time slot identified by the USF in the received RLC/MAC block. The dummy control block message is sent on the PACCH from the MS to the network when the MS has no other RLC block to transmit. FIG. 2 shows for an exemplary implementation of extended uplink TBF the downlink (RX) time slots and uplink (TX) time slots for n + X TMDA frames or blocks in which RLC/MAC blocks are transferred. As can be seen in FIG. 2, downlink timeslots 2/3/4 and uplink timeslot 3 were assigned to the MS at the beginning of the TBF. For each block the received USF in time slot 3 determines if the MS has to transmit a RLC/MAC block to the network in the following block using uplink time slot 3. In the example shown in FIG. 2, the MS has no other RLC block to transmit, and so dummy control block messages are sent on uplink timeslot 3.

3GPP TS 44.060 states that extensive delay of an uplink TBF release whilst the MS does not send any RLC information might impact badly on the MS power consumption and should be avoided. 3GPP TS 44.060 also states that the inactivity periods, when MS is in extended TBF mode, should not be too long in order to keep the overall performance of GPRS services and specifies that the maximum inactivity period should be no longer than 5 seconds.

In order to reduce the current drain on the MS and hence the power consumption, a parameter EXT_UTBF_NODATA is defined in the specification. This parameter is broadcast by the network in a GPRS Cell Options Information Element so as to instruct MSs operating in an extended uplink TBF mode not to send any uplink dummy control block messages when there is no other RLC/MAC block ready to be sent by the MS. Thus, power consumption is reduced in a MS since the MS is no longer required to send the uplink dummy control block messages when there is no other RLC/MAC block ready to send.

However, the use of the parameter EXT_UTBF_NODATA is not a flexible solution. The network cannot be sure if the MS is still in extended uplink TBF mode since the network receives no information from the MS. Moreover, the MS still has to decode all the assigned downlink time slots in order to determine if there is an USF assigned for the next block period even if the MS has no data left to transmit.

Similar problems exist for the delayed release of downlink TBF. 3GPP TS 44.060 states that extensive delay of a downlink TBF release might impact badly on the MS power consumption and should be avoided. However, no solution is provided in the specification to reduce current drain for the delayed downlink TBF release.

Another disadvantage of artificially maintaining the TBFs is that radio resources are required to maintain the TBFs in the extended TBF mode and these resources could instead be used for other MSs.

EP patent application publication no. EP 1376950 describes a method for releasing single TBF's in a mobile radio system which enables the final release of the resources temporarily allocated to an uplink TBF to be delayed by the network sending an acknowledgement message in response to the last received uplink radio block, and included in the ACK message content is a valid extension field (Txxxx, E/D) containing a counting value of the radio frames passed since the sending of the ACK message. Then the network starts the extension counting (Txxxx) during which a request for a new uplink TBF from the mobile, or any downlink message involving the mobile, is valid up to the expiration of the counting value. The mobile receives via the ACK message the extension field (Txxxx, E/D) and starts the extension counting during which it knows the resources allocated to the mobile are kept reserved by the network for a new uplink TBF or downlink TBF request until the counting value expires.

EP patent application publication no. EP 1379033 describes a method for releasing single TBF's in a mobile radio system which enables the final release of the resources temporarily allocated to a downlink TBF to be delayed by the mobile station sending an acknowledgement message in response to the reception of the last downlink data packet from the network and continue to be active on the resources (both uplink and downlink) of the released TBF. In particular while a Timer T3192 in the mobile, which times the release of the resources allowed for downlink TBF, is running, the MS can at any time forward its query for opening of an uplink TBF on the uplink resources of the released downlink TBF.

3GPP TS 43.064 V7.3.0 (2006-11) entitled '3rd Generation Partnership Project; Technical Specification Group GSM/EDGE Radio Access Network; General Packet Radio Service (GPRS); Overall description of the GPRS radio interface; Stage 2 (Release 7)' provides the overall description for lower-layer functions of the GPRS and EGPRS radio interface (Um).

An article entitled 'Early TBF establishment', 3GOO TSG-GERAN Meeting #27, Atlanta, USA, 7-11 Nov 2005, Source Siemens, Tdoc GP-052632, Agenda Item: 7.2.5.3.5, Internet citation, XP002375228 retrieved from URL: http//www.3gpp.org/ftp/tsg_geran/TSG_GERAN/GERAN_27_Atlanta/ Docs> mentions briefly extended UL TBF operation and describes how early UL TBF establishment may be achieved by applying the extended UL TBF behaviour right from the beginning of an uplink TBF.

Summary of the Invention

In accordance with the present invention there is provided a method of controlling operation of a communication device as claimed in claim 1 of the accompanying claims.

In accordance with another aspect of the present invention there is provided a communication device as claimed in claim 13 of the accompanying claims.

In accordance with another aspect of the present invention there is provided a wireless communication system as claimed in claim 24 of the accompanying claims.

Brief Description of the Drawings

A method of controlling operation of a communication device in accordance with the present invention, a communication device in accordance with the present invention and a wireless communication system in accordance with the present invention will now be described, by way of example only, with reference to the accompanying drawings in which:

FIG. 1 is a schematic diagram providing a representation of the structure of a RLC/MAC block;
FIG. 2 is a schematic diagram showing the downlink (RX) and uplink (TX) time slots for an exemplary implementation of extended uplink TBF;
FIG. 3 is a block schematic diagram of a wireless communication system in accordance with an embodiment of the disclosure;
FIG. 4 is a block schematic diagram of a communication device in accordance with an embodiment of the disclosure;
FIG. 5 is a schematic diagram showing the downlink (RX) and uplink (TX) time slots for an exemplary implementation of extended uplink TBF in accordance with the disclosure; and
FIG. 6 is a block schematic diagram showing the operation state of the communication device of FIG. 4 during extended TBF mode in accordance with an embodiment of the disclosure.

Detailed Description of the Drawings

An embodiment of the present invention will be described with reference to a GPRS system, but it will be appreciated that the present invention may apply to any wireless communication system that supports extended TBF mode e.g. any wireless communication system that employs packet switching technology and supports extended TBF mode, PMR, EDGE, Universal Mobile Telecommunication System (UMTS), evolutions such as Worldwide interoperability for Microwave Access (Wi-MAX), Long Term Evolution (LTE) systems, or the like.

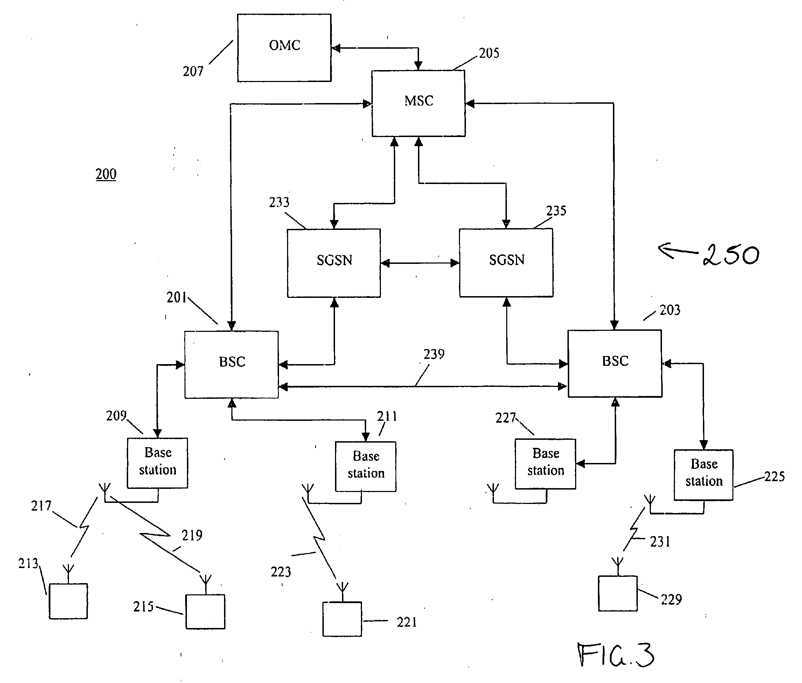

FIG. 3 is an illustration of a wireless communication system 200 in accordance with an embodiment of the invention. Specifically, the communication system is a GPRS system.

The communication system 200 comprises a wireless communication network 250 communicating with communication devices 213, 215, 221, 229 via radio communication links 217, 219, 223, 231 between the communication devices 213, 215, 221, 229 and Base Stations (BSs) 209, 211, 227, 225. The communication device may typically be a subscriber unit, a wireless user equipment, a portable or mobile telephone, a wireless video or multimedia device, a communication terminal, a personal digital assistant (PDA), a laptop computer, an embedded communication processor or any communication device operable to communicate over the radio communication links. In the following, the communication devices are referred to as mobile stations (MSs).

In a typical GPRS communication system, a large number of Base Station Controllers (BSCs) 201, 203 (two shown) are connected to a Mobile Services Switching Centre (MSC) 205. The MSC 205 is the central switch centre and switches communication between different BSCs such that MSs connected to one BSC can communicate with MSs associated with other BSCs. In addition, the MSC 205 is responsible for interfacing with other networks, performing authentication, some mobility management etc. as is well known. The MSC 205 and typically the BSCs 201, 203 are connected to an Operations and Maintenance Centre (OMC) 207, where the operation and performance of the wireless communication network 250 is monitored and controlled by the network operator.

The BSC 201 is further coupled to a plurality of BSs 209, 211 to provide a Base Station Subsystem (BSS) and the BSC 203 is further coupled to a plurality of BSs 227, 225 to provide another BSS.

The wireless communication network 250 further comprises a number of Serving GPRS Support Nodes (SGSNs) and Gateway GPRS Support Nodes (SGSNs). Specifically, FIG. 3 shows the BSC 201 and the serving base station 211 coupled to a first SGSN 233, and the BSC 203 and base station 225 coupled to a second SGSN 235. Thus the first SGSN 233 is the serving SGSN for the MS 221, and the second SGSN 235 is the serving SGSN for the MS 229.

The SGSNs 233, 235 are part of the GPRS packet based functionality of the wireless communication network 250. The SGSNs comprise functionality for routing data from the GPRS MSs towards the desired destination. The SGSNs further provide mobility and session management functionality for the GPRS services. GPRS mobility management signalling is exchanged between the SGSN 233 and the SGSN 235, when ,for example, a GPRS MS roams from the area served by SGSN 233 to the area served by SGSN 235. The SGSNs may further be coupled to one or more Gateway GPRS Support Nodes (GGSNs) (not shown), which are operable to route data in the packet based network. In addition, the GGSNs specifically comprise interworking functions for interfacing to external communication systems such as e.g. the Internet.

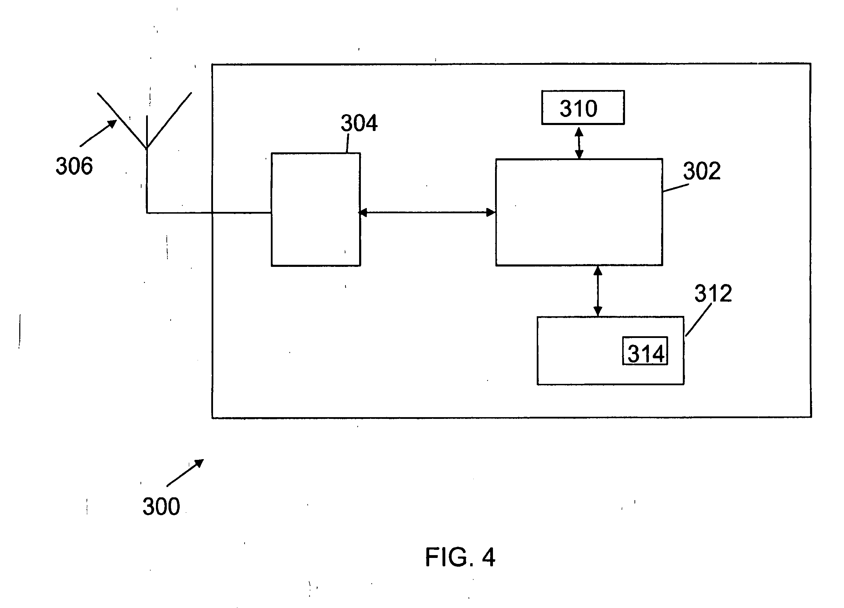

A diagram of the main functional components of an exemplary MS 300 in accordance with an embodiment of the present invention is shown in FIG. 4. As will-be apparent to a skilled person, only those functional components of the MS 300 that are necessary for an understanding of the invention have been shown and will be described.

The MS 300 comprises a processing unit 302 for carrying out operational processing for the MS 300. The MS 300 also has a communication section 304 for providing wireless communication with a remote BS such as BS 209 in FIG. 2 via a radio communication link. The communication section 304 typically includes an antenna 306, a modulation/ demodulation section (not shown), and a coding/decoding section (not shown), for example, as will be known to a skilled person and thus will not be described further herein. The communication section 304 is coupled to the processing unit 302.

The MS 300 also has a Man Machine Interface MMI 310, including elements such as a key pad, microphone, speaker, display screen, for providing an interface between the MS and the user of the MS. The MMI 310 is also coupled to the processing unit 302.

The processing unit 302 may be a single processor or may comprise two or more processors carrying out all processing required for the operation of the MS 300. The number of processors and the allocation of processing functions to the processing unit is a matter of design choice for a skilled person. The MS 300 also has a program memory 312 in which is stored programs containing processor instructions for operation of the MS 300. The programs may contain a number of different program elements or subroutines containing processor instructions for a variety of different tasks, for example, for: communicating with the user via the MMI 310; and processing signalling messages received from the network 250. Specific program elements stored in program memory 312 include a paging block allocation element 314 for calculating a paging block(s) to be allocated to the MS 300 which allocated paging block(s) will be used by the network 250 to make contact with the MS 300. The operation of the paging block allocation element 314 will be described in more detail below.

The MS 300, once turned on, may be in one of three operating modes in relation to the network 250: idle mode, standby mode or ready mode. In the idle mode, the MS 300 is not connected to the mobility management of the network 250 and communication is not possible since the MS 300 and network 250 have no valid location or routing information for the MS 300. In this idle mode, in order to communicate with the MS 300, a paging procedure is performed in which paging blocks are sent to the MS 300 over PCCCH or CCCH. In the standby mode, the MS 300 periodically updates its position as required. In the ready mode, the MS 300 is attached to the network 250 and a virtual connection is made with the SGSN and GGSN so that the network 250 knows where to route data. In the ready mode, the MS 300 is prepared for a call or data transfer.

A control channel is a logical channel which is used for communication between the BS and MS 300 for call set-up and for signalling required for management of the MS 300 and the channel structure. When a MS 300 listens to a common control channel (PCCCH or CCCH) in idle mode, the MS uses discontinuous reception (DRX) in order to reduce power consumption in the MS 300 when no radio resources have been allocated to the MS 300. In DRX mode, the MS 300 listens to or monitors only specific one or more paging blocks allocated to the MS 300 and at other times inactivates certain elements, such as the communication section 304, in order to reduce power consumption and conserve battery life. The network 250 knows which MSs listens to which paging blocks and so can communicate with any MS if necessary via the paging blocks. When the MS 300 receives and recognises a paging block allocated to it, the MS knows that it is to set up a communication link with the network 250 via a BS.

The following patent applications/patents describe various methods for saving power in the MS in DRX mode: EP1613107, US7020102.

In practice, both the network 250 and a particular MS - are able to calculate the allocated paging block(s) for that MS which the base station will use to make contact with that particular mobile terminal by means of a SPLIT_PG_CYCLE parameter. The allocation of paging block(s) to a particular MS 300 is negotiated between the MS 300 and the network 250 during the attach period. The GPRS attach is a process during which the MS informs the network about its presence in the network and the MS usually initiates the GPRS attach after power on. In the MS 300, the paging block allocation element 314 performs this calculation and the MS 300 informs the network of the calculated paging blocks. This parameter is defined in the Technical Specification 3GPP TS 45.02 - Multiplexing and multiple access on the radio path, chapter 6.5.6 as set out below. Thus, the MS will be able to monitor for a paging block at the correct time point to receive any paging block transmitted to it.

A MS in DRX packet idle mode shall listen to the paging blocks on control channels CCCH or PCCCH as follows:

```
PCCCH_GROUP (0..KC-1) = ((IMSI mod 1000) mod (KC* N)) div N


PAGING_GROUP (0..M-1) = (((IMSI mod1000) div(KC*N)) * N +

                        (IMSI mod 1000) mod N + Max((m*M)

                    div SPLIT_PG_CYCLE, m)) mod M
          for m = 0, ... , Min(M, SPLIT_PG_CYCLE) -1
```

Where:

```
 KC      = number of (P)CCCH in the cell =
          BS_PCC_CHANS for PCCCH
          BS_CC_CHANS for CCCH
```

```
M = number of paging blocks "available" on one (P)CCCH =

(12 - BS_PAG_BLKS_RES - BS_PBCCH_BLKS) * 64 for PCCCH

(9 - BS_AG_BLKS_RES) * 64 for CCCH not combined (3 - BS_AG_BLKS_RES) * 64 for CCCH + SDCCH combined

N =  1 for PCCCH

    (9-BS_AG_BLKS_RES)*BS_PA_MFRMS for CCCH not combined (3-BS_AG_BLKS_RES)*BS_PA_MFRMS for CCCH/SDCCH combined
```

SPLIT_PG_CYCLE is an MS specific parameter negotiated at GPRS attach (see 3GPP TS 44.060)
IMSI = International Mobile Subscriber Identity, as defined in 3GPP TS 23.003.
mod = Modulo.
div = Integer division.

The MS shall receive paging and perform access on a single (P)CCCH identified by the PCCCH_GROUP parameter.

In DRX mode, the MS listens to the blocks corresponding to its paging group as defined by the different PAGING_GROUP values.

In order to implement the extended TBF mode whilst reducing current drain and power consumption in the MS, the present disclosure applies the principles of DRX to the extended TBF mode. Thus, whilst in extended TBF mode, the MS 300 is arranged to monitor or listen for one or more paging blocks that have been allocated to the MS 300 for the extended TBF mode rather than listening for all the allocated time slots as is currently the case. During periods when the MS 300 is not required to monitor the paging blocks from the network 250, the MS 300 can switch off certain components of the MS so as to reduce overall power consumption of the MS 300. The MS 300 can then determine the operating mode of the MS 300 in response to receiving an allocated paging block and according to whether there is data to be communicated between the communication device and the wireless communication network. As will be described in detail below, the step of determining or controlling the operating mode of the MS 300 may include changing the operating mode from the extended TBF mode to the normal TBF mode when there is data to be transferred and in response to receiving an allocated paging block, maintaining the extended TBF mode in response to receiving an allocated paging block when there is no data to be transferred or changing to the idle mode after a period of time.

In an extended uplink TBF mode, the allocated paging block may include an USF for the MS 300 which indicates the uplink time slot in which the MS 300 will transmit data to the network 250. The data includes the dummy control block message when there is no data block to be transferred or the data blocks themselves when available.

In the extended downlink TBF mode, information in the allocated paging block is used to determine or control the operation of the MS 300. The MS 300 determines whether a downlink data block in a received allocated paging block is valid or not and then changes the operation of the MS 300 from the extended downlink transfer block flow mode to a downlink transfer block flow mode in response to determining the downlink data block is valid and maintains the MS 300 in the extended transfer block flow in response to determining the downlink data block is not valid.

Any formula which determines the allocation of one or more paging blocks to a MS may be used to allocate one or more paging blocks to a MS in an extended TBF mode. For example, the formula outlined above for the PAGING_ GROUP parameter in DRX mode may be used. Since the time between paging blocks in the DRX mode is typically around 1s, in to ensure reasonable response time, the MS in the extended TBF mode should listen for the paging block (s) more often. Thus, the above PAGING_GROUP formula can be adapted to calculate the allocation of one or more paging block(s) to a MS in extended TBF by saying that the 64 multiframes are replaced by 8 (in order to keep a reasonable access time) and a new SPLIT_PG_CYCLE_TBF is negotiated during the attach procedure between the MS 300 and the network 250. An exemplary formula for allocating one or more paging blocks to a MS in an extended TBF is given in equation 1 below:

$$PAGING\_GROUP_{(m=0,...,SPLIT\_PG\_CYCLE\_TBF)} = (IMSI\ 1000) + Max\left(\frac{(m*M)}{SPLIT\_PG\_CYCLE\_TBF}, m\right)\ [M]$$

Equation 1

Where M=12*8=96 (number of paging blocks "available" on eight PDTCH multi-frames)

More generally, M can be equal to R X S with R being the number of paging blocks 'available' and S being the number of multi-frames.

The SPLIT_PG_CYCLE_TBF could be coded on 4 bits allowing values from 1 to 16.

Referring now also to FIG. 5 which shows the downlink (RX) time slots and uplink (TX) time slots for n + X TMDA frames or blocks for an exemplary implementation of extended uplink TBF in accordance with the invention, during extended uplink/downlink TBF mode, the MS 300 in accordance with the disclosure will listen only to its allocated paging blocks, blocks 500 in FIG. 5. In the time between monitoring for the allocated paging blocks 500, the MS 300 may conserve power and current drain by switching off certain components of the MS 300.

In extended uplink TBF mode, if a decoded paging block 500 includes an USF 502 corresponding to the MS's assigned USF, then the MS 300 shall send an uplink dummy control block message 504 in the next time slot according to the USF 502 if no data block is available and stay in the extended TBF mode. If a decoded paging block 500 includes an USF 502 corresponding to the MS's assigned USF, and new data blocks are available, then the MS 300 shall send a data block in the next time slot according to the USF 502 and shall go back to normal TBF operation.

In extended downlink TBF mode, if a decoded paging block 500 includes a dummy downlink data block with a Final Block Indicator (FBI) bit set to 0, the MS 300 shall stay in extended TBF mode and continue to listen for its allocated paging blocks 500. Moreover, if the S/P field is valid in the decoded paging block, the MS shall respond to the polling by the network in the uplink block specified by the RRBP field. If a decoded paging block 500 includes a valid downlink data block, the MS 300 shall go back to normal TBF operation listening to all its downlink time slots assigned at the start of the TBF.

Since the MS 300 sends a response on receipt of the allocated paging block to the network 250, the present disclosure ensures that the network 250 can know whether the MS 300 is still in extended TBF mode.

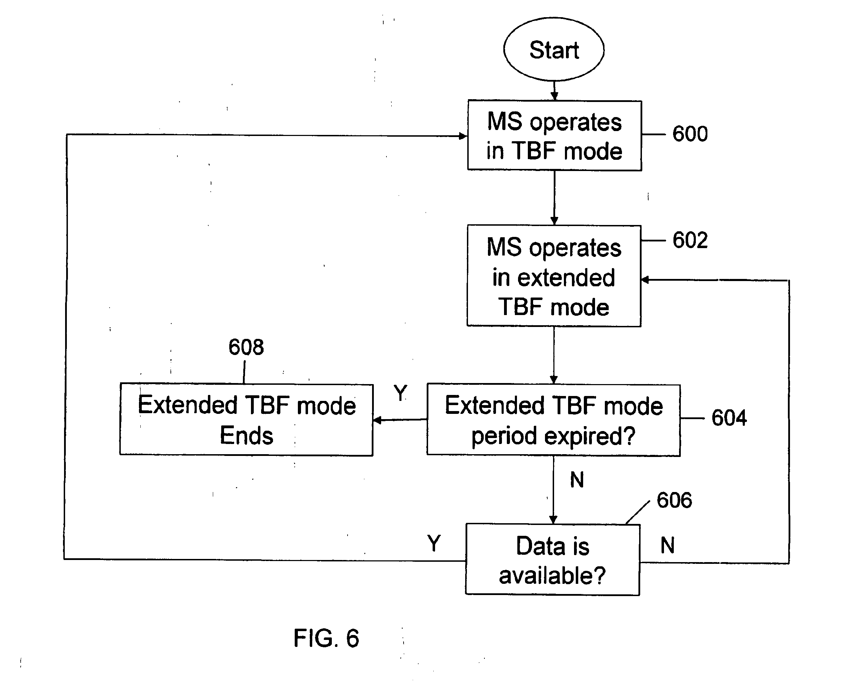

The operation state of the MS 300 in accordance with the present disclosure will now be described with further reference to FIG. 6.

When the MS 300 is switched on, a GPRS attach process is executed during which certain parameters are negotiated including the SPLIT_PG_CYCLE_TBF parameter. The allocation of the one or more paging blocks to the MS 300 for the extended TBF mode is also determined based on this parameter and notified to the network 250 and MS 300. When there is data to be transferred between the network 250 and MS 300, the network 250 may allocate radio resources according to a TBF mode and thus, establish a TBF connection with the MS 300 operating in an TBF mode, block 600. If data is to be transmitted to the MS 300, a downlink TBF is established and if data is to be transmitted from the MS 300, an uplink TBF is established. When all the data has been transferred, the MS 300 switches to an extended TBF mode, block 602, during which the TBF connection is maintained for a period of time and the MS 300 monitors for the one or more paging blocks that have been allocated to it at the appropriate time. The extended TBF mode period of time during which the MS 300 is in the extended TBF mode is monitored by several timers in the MS 300 and is typically 5s.

Provided the extended TBF mode period of time has not expired, as determined by block 604, when data becomes available to communicate between the MS 300 and network 250, at 606, the MS 300 returns to the normal TBF mode, at block 600, on receipt of the next allocated paging block for the transfer of the newly available data. For data to be transmitted from the MS 300, the newly available data is transmitted on the uplink block as defined by the USF in the paging block received by the MS 300. When there is no data to be transferred, the MS 300 remains in the extended TBF mode. On receipt of the allocated paging block, the MS may transmit an uplink dummy control block message in the next time slot according to the USF or a polling response according to the S/P field. When there is no data to be transferred, the MS 300 remains in the extended TBF mode until the extended TBF mode period of time expires at which time the extended TBF mode ends and the TBF connection is released, block 608. The network can also decide to end the extended TBF mode period at any point by informing the MS on its allocated paging block. At this point, the MS 300 is in idle mode.

Irrespective of which element of the system 200 performs the calculation of the allocation of the one or more paging blocks for a MS in the extended TBF mode, the network 250 and MS must be notified of the allocated one or more paging blocks. This would typically be performed as part of the attach process and the allocated paging blocks would typically remain fixed until the next attach process. Alternatively, the allocation of the one or more paging blocks may be dynamically changed. For example, the network 250 (or MS) may calculate new allocated paging blocks for a MS and notify them to the MS (or network) at the beginning of an extended TBF mode.

The present disclosure applies to any extended TBF mode during which there is no data to be transmitted between the MS 300 and the network 250 but during which it is desirable to maintain a TBF. Thus, the present disclosure applies to any extended TBF mode including extended uplink TBF mode or extended downlink TBF.

In order to fully appreciate the current drain savings achieved by the present disclosure, consider the following example in which:

IMSI %1000 = 789

SPLIT_PG_CYCLE_TBF = 12 during attach procedure.

Then if from Equation 1:

$$PAGING\_GROUP_{(m=0,...,SPLIT\_PG\_CYCLE\_TBF-1)} = (IMSI\lfloor 1000 \rfloor) + Max\left(\frac{(m*M)}{SPLIT\_PG\_CYCLE\_TBF}, m\right) \quad [M]$$

M = 96, so:

$PAGING\_GROUP_{(m=0)} = 21$
$PAGING\_GROUP_{(m=1)} = 29$
$PAGING\_GROUP_{(m=2)} = 37$
...
$PAGING\_GROUP_{(m=11)} = 13$

The Mobile Station will listen to the blocks at the AFN defined by the above paging group values.

As one multi-frame duration is 52 TDMA=240 ms, the maximum time to access the network is in this case

$$\frac{240 \times 8}{12} = 160ms$$

Thus, since this time to access the network is much lower than the time to access the network from idle mode, the present disclosure provides a saving of up to 98% of current drain in the MS during the extended TBF mode compared to the existing uplink TBF implementation while keeping a reasonable access time to the packet resources.

Thus, the present disclosure provides the benefits of reduced latency by implementing the extended TBF mode but provides reduced current drain in the MS and saves radio resources, in other words reduces the radio activity over the air interface, due to the fact that the MS needs to monitor only for the allocated paging blocks rather than listening for all the blocks as in the existing implementations. This means that the MS can power down certain components in the times between the allocated paging blocks as in the DRX mode. The result is that the battery life of a MS can be lengthened.

It will be appreciated that the present invention may be used in extended uplink TBF mode, extended downlink TBF mode and in concurrent extended uplink and downlink TBF mode.

In MSs which implement a Dual Transfer Mode (DTM) feature (i.e. a device that may use simultaneously a circuit switched connection and a packet switched connection), the present disclosure can be further adapted such that if the MS has nothing to send, then it shall not respond to the USF/polling on the allocated paging blocks. This is possible due to the fact that the network knows that the MS is still in transmission as the circuit switched connection will still be active. With this adaptation, it is likely that the network 250 will always switch directly to DTM configurations when in a call as it will not impact the current drain but will decrease the latency of packet access (for video conferencing for example).

In arrangements in which more than one time slot is allocated to a MS, the present disclosure can be adapted such that the number of paging blocks monitored and decoded by the MS can be reduced by making the MS listen only to one specific allocated timeslot in a paging block during the extended TBF mode. With this adaptation, the current drain in the MS can be further reduced compared to the implementation of listening for the multiple time slots belonging to the extended TBF paging blocks.

**Claims**

1. A method of controlling operation of a communication device (300) in communication with a wireless communication network (250), the communication device (300) being capable of operating in an extended transfer block flow mode, the method being **characterised by**:

    allocating one or more paging blocks (500) to the communication device (300) for the extended transfer block flow mode;

    monitoring only for the allocated one or more paging blocks (500) by the communication device (300) whilst operating in the extended transfer block flow mode; and

    determining the operating mode of the communication device in response to receiving an allocated paging block and according to whether there is data to be communicated between the communication device (300) and the wireless communication network (250),

    wherein determining the operating mode of the communication device comprises when there is data to be communicated (606), changing the operation of the communication device from the extended transfer block flow mode (602) to a transfer block flow mode (600) in response to receiving an allocated paging block and when there is no data to be communicated (606), maintaining the communication device in the extended transfer block flow mode (602) in response to receiving an allocated paging block.

2. A method according to claim 1, wherein the communication device (300) is maintained in the extended transfer block flow mode until there is data to be communicated or expiry of a predetermined time period or in response to an instruction from the wireless communication network (250).

3. A method according to claim 2, further comprising changing (608) the operating mode of the communication device from the extended transfer block flow mode to an idle mode on expiry (604) of the predetermined time period.

4. A method according to any preceding claim, wherein monitoring includes monitoring for the allocated one or more paging blocks (500) at predetermined times and during other times disabling elements of the communication device (300) in order to reduce power consumption.

5. A method according to any preceding claim, wherein the allocating step is performed during an attach process.

6. A method according to any preceding claim, wherein the allocating step is performed during the operation of the communication device (300).

7. A method according to any preceding claim, wherein the step of allocating one or more paging blocks (500) to the communication device (300) for the extended transfer block flow mode comprises calculating:

$$\text{PAGING\_GROUP } (0..M-1) = (((\text{IMSI mod}1000)\ \text{div}(KC*N))\ *\ N\ +$$
$$(\text{IMSI mod } 1000)\ \text{mod } N + \text{Max}((m*M)$$
$$\text{div SPLIT\_PG\_CYCLE, m}))\ \text{mod } M$$
$$\text{for } m = 0,\ \ldots\ ,\ \text{Min}(M,\ \text{SPLIT\_PG\_CYCLE})\ -1$$

    Where:

    KC= number of common control channels in the cell,
    M = number of paging blocks "available" on one common control channel,
    N = 1 for PCCCH
    (9-BS_AG_BLKS_RES)*BS_PA_MFRMS for CCCH not combined (3-BS_AG_BLKS_RES)*BS_PA_MFRMS for CCCH/SDCCH combined,
    SPLIT_PG_CYCLE is a device specific parameter negotiated at attach, and
    IMSI = International Mobile Subscriber Identity.

8. A method according to any one of claims 1-7, wherein the step of allocating one or more paging blocks (500) to the communication device (300) for the extended transfer block flow mode comprises calculating:

$$PAGING\_GROUP_{(m=0,...,SPLIT\_PG\_CYCLE\_TBF)} = (IMSI \mod 1000) + Max\left(\frac{(m*M)}{SPLIT\_PG\_CYCLE\_TBF}, m\right) \mod [M]$$

Where:

M = R X S, with R being the number of available
paging blocks and S being the number of multi-frames SPLIT_PG_CYCLE_TBF is a device specific parameter
negotiated at attach, and
IMSI = International Mobile Subscriber Identity.

**9.** A method according to any preceding claim, wherein during an extended uplink transfer block flow mode, the method further comprises transmitting, by the communication device (300) in response to receiving an allocated paging block, data in an uplink time slot according to an Uplink Stage Flag field (502) in the received allocated paging block (500).

**10.** A method according to claim 9, wherein when there is no data to be communicated, the data includes a dummy control block message (504).

**11.** A method according to any one of claims 1-8, wherein during an extended downlink transfer block flow mode, the method further comprises:

determining whether a downlink data block in a received allocated paging block is valid;
changing the operation of the communication device (300) from the extended downlink transfer block flow mode to a downlink transfer block flow mode in response to determining the downlink data block is valid and maintaining the communication device in the extended transfer block flow mode in response to determining the downlink data block is not valid.

**12.** A method according to any preceding claim, wherein during an extended transfer block flow mode, the method further comprises transmitting data to the wireless communication network (250), by the communication device (300) in response to receiving an allocated paging block including a polling field set to a predetermined value.

**13.** A communication device (300) for communicating with a wireless communication network (250) during an extended transfer block flow mode, the communication device comprising:

a communication section (304) arranged to provide wireless communication with the wireless communication network (250); and
a processing unit (302) coupled to the communication section (304), the communication device (300) being **characterised by**
the processing unit (302) being arranged whilst the communication device operates in the extended transfer block flow mode to monitor only for one or more paging blocks (500) allocated to the communication device for the extended transfer block flow mode and to determine the operating mode of the communication device (300) in response to receiving an allocated paging block (500) and according to whether there is data to be communicated between the communication device and the wireless communication network (250),
wherein the processing unit (302) is further arranged to change the operation of the communication device (300) from the extended transfer block flow mode to a transfer block flow mode in response to receiving an allocated paging block and when there is no data to be communicated and to maintain the communication device in the extended transfer block flow mode in response to receiving an allocated paging block and when there is no data to be communicated.

**14.** A communication device according to claim 13, wherein the processing unit (302) is arranged to maintain the communication device in the extended transfer block flow mode until there is data to be communicated or expiry of a predetermined time period or in response to an instruction from the network.

**15.** A communication device according to claim 14, wherein the processing unit (302) is further arranged to change the operating mode of the communication device from the extended transfer block flow mode to an idle mode on expiry of the predetermined time period.

**16.** A communication device according to any one of claims 13-15, wherein the processing unit (302) is arranged to monitor for the allocated one or more paging blocks (500) at predetermined times and during other times to disable elements of the communication device in order to reduce power consumption.

**17.** A communication device according to any one of claims 13-16, wherein the processing unit (302) is further arranged to determine the allocation of the one or more paging blocks (500) to the communication device (300) for the extended transfer block flow mode.

**18.** A communication device according to any one of claims 13-17, wherein the one or more paging blocks (500) are allocated to the communication device (300) by calculating:

```
PAGING_GROUP (0..M-1) = (((IMSI mod1000) div(KC*N)) * N +
                    (IMSI mod 1000) mod N + Max((m*M)
                    div SPLIT_PG_CYCLE, m)) mod M
        for m = 0, ... , Min(M, SPLIT_PG_CYCLE) -1
```

Where:

KC= number of common control channels in the cell,
M = number of paging blocks "available" on one common control channel,

```
N =  1 for PCCCH
     (9-BS_AG_BLKS_RES)*BS_PA_MFRMS for CCCH not combined
     (3-BS_AG_BLKS_RES)*BS_PA_MFRMS for CCCH/SDCCH
     combined,
```

SPLIT_PG_CYCLE is a device specific parameter negotiated at attach, and
IMSI = International Mobile Subscriber Identity.

**19.** A communication device according to any one of claims 13-17, wherein the one or more paging blocks (500) are allocated to the communication device (300) by calculating:

$$PAGING\_GROUP_{(m=0,...,SPLIT\_PG\_CYCLE\_TBF)} = (IMSI[1000]) + Max\left(\frac{(m*M)}{SPLIT\_PG\_CYCLE\_TBF}, m\right) \quad [M]$$

Where:

M = R X S, with R being the number of available
paging blocks and S being the number of multi-frames SPLIT_PG_CYCLE_TBF is a device specific parameter
negotiated at attach, and
IMSI = International Mobile Subscriber Identity.

**20.** A communication device according to any one of claims 13-19, wherein the communication device is arranged during an extended uplink transfer block flow mode, to transmit, in response to receiving an allocated paging block, data in an uplink time slot according to an Uplink Stage Flag field (502) in the received allocated paging block.

21. A communication device according to claim 20, wherein when there is no data to be communicated, the data includes a dummy control block message (504).

22. A communication device according to any one of claims 13-19, wherein the processing unit (302) is arranged during an extended downlink transfer block flow mode, to determine whether a downlink data block in a received allocated paging block is valid, to change the operation of the communication device from the extended downlink transfer block flow mode to a downlink transfer block flow mode in response to determining the downlink data block is valid and to maintain the communication device in the extended transfer block flow mode in response to determining the downlink data block is not valid.

23. A communication device according to any one of claims 13-22, wherein the communication device (300) is arranged during an extended transfer block flow mode, to transmit data to the wireless communication network (250) in response to receiving an allocated paging block (500) including a polling field set to a predetermined value.

24. A wireless communication system comprising:

a wireless communication network (250); and
a communication device (300) according to any one of claims 13-23 for communicating with a wireless communication network during an extended transfer block flow mode.

**Patentansprüche**

1. Verfahren zur Steuerung des Betriebs einer Kommunikationsvorrichtung (300), welche in Kommunikation mit einem drahtlosen Kommunikationsnetz (250) steht, wobei die Kommunikationsvorrichtung (300) in der Lage ist, in einem erweiterten Übertragungs-Blockflussmodus zu arbeiten, wobei das Verfahren durch die folgenden Schritte **gekennzeichnet** ist:

Zuweisung einer oder mehrerer Paging-Blöcke (500) zu der Kommunikationsvorrichtung (300) für den erweiterten Übertragungs-Blockflussmodus;
Überwachung nur des einen oder der mehreren zugewiesenen Paging-Blöcke (500) durch die Kommunikationsvorrichtung (300), solange diese in dem erweiterten Übertragungs-Blockflussmodus arbeitet; und
Bestimmung des Betriebsmodus der Kommunikationsvorrichtung ansprechend auf den Empfang eines zugewiesenen Paging-Blocks und gemäß dem Fall, ob Daten vorhanden sind, welche zwischen der Kommunikationsvorrichtung (300) und dem drahtlosen Kommunikationsnetz (250) übertragen werden sollen;
wobei die Bestimmung des Betriebsmodus der Kommunikationsvorrichtung einschließt, dass bei Vorhandensein von zu übertragenden Daten (606) ein Wechsel des Betriebs der Kommunikationsvorrichtung von dem erweiterten Übertragungs-Blockflussmodus (602) zu einem Übertragungs-Blockflussmodus (600) ansprechend auf den Empfang eines zugewiesenen Paging-Blocks erfolgt, und dass bei Nichtvorhandensein von zu übertragenden Daten (606) die Kommunikationsvorrichtung ansprechend auf den Empfang eines zugewiesenen Paging-Blocks in dem erweiterten Übertragungs-Blockflussmodus (602) gehalten wird.

2. Verfahren nach Anspruch 1, **dadurch gekennzeichnet, dass** die Kommunikationsvorrichtung (300) in dem erweiterten Übertragungs-Blockflussmodus gehalten wird, bis zu übertragende Daten vorhanden sind oder bis eine vorher festgelegte Zeitperiode abgelaufen ist, oder ansprechend auf den Befehl von dem drahtlosen Kommunikationsnetz (250).

3. Verfahren nach Anspruch 2, welches des Weiteren bei Ablauf (604) der vorher festgelegten Zeitperiode den Wechsel (608) des Betriebsmodus der Kommunikationsvorrichtung von dem erweiterten Übertragungs-Blockflussmodus in einen Leerlaufmodus aufweist.

4. Verfahren nach einem der vorhergehenden Ansprüche, **dadurch gekennzeichnet, dass** der Überwachungsschritt die Überwachung des einen oder der mehreren Paging-Blöcke (500) zu vorher festgelegten Zeiten und während anderen Zeiten aufweist, welche Bauelemente der Kommunikationsvorrichtung (300) zur Reduzierung des Energieverbrauch deaktivieren.

**5.** Verfahren nach einem der vorhergehenden Ansprüche, **dadurch gekennzeichnet, dass** der Zuweisungsschritt während eines Zuordnungsprozesses ausgeführt wird.

**6.** Verfahren nach einem der vorhergehenden Ansprüche, **dadurch gekennzeichnet, dass** der Zuweisungsschritt während des Betriebs der Kommunikationsvorrichtung (300) ausgeführt wird.

**7.** Verfahren nach einem der vorhergehenden Ansprüche, **dadurch gekennzeichnet, dass** der Schritt der Zuweisung eines oder mehrerer Paging-Blöcke (500) zu der Kommunikationsvorrichtung (300) für den erweiterten Übertragungs-Blockflussmodus die folgende Berechnung aufweist:

$$\text{PAGING\_GROUP } (0..M\text{-}1) = (((IMSI \bmod 1000) \, div(KC*N) * N + (IMSI \bmod 1000) \bmod$$
$$N + Max((m*M) \, div \, SPLIT\_PG\_CYCLE, m)) \bmod M$$

für m = 0, ..., Min(M, SPLIT_PG_CYCLE) -1;

wobei:

KC = Anzahl der gemeinsamen Steuerkanäle (CCCH) in der Zelle;
M = Anzahl der auf einem gemeinsamen Steuerkanal "verfügbaren" Paging-Blöcke;

N = 1 für PCCCH
(9-BS_AG_BLKS_RES)*BS_PA_MFRMS für nicht kombinierten CCCH
(3-BS_AG_BLKS_RES)*BS_PA_MFRMS für kombinierten CCCH/
SDCCH;

SPLIT_PG_CYCLE ist ein vorrichtungsspezifischer Parameter, der bei Zuordnung verhandelt wird; und
IMSI = International Mobile Subscriber Identity bzw. internationale Mobilfunkteilnehmer-Identifizierung.

**8.** Verfahren nach einem der Ansprüche 1 bis 7, **dadurch gekennzeichnet, dass** der Schritt der Zuweisung einer oder mehrerer Paging-Blöcke (500) zu der Kommunikationsvorrichtung (300) für den erweiterten Übertragungs-Blockflussmodus die folgende Berechnung aufweist:

$$\mathit{PAGING\_GROUP}_{(m=0,\ldots,SPLIT\_PG\_CYCLE\_TBF\text{-}1)} = (IMSI[1000]) + Max \left(\frac{(m*M)}{SPLIT\_PG\_CYCLE\_TBF}, m\right) \quad [M]$$

wobei:

M = R X S, wobei R die Anzahl verfügbarer Paging-Blöcke und S die Anzahl der Mehrfachrahmen ist;
SPLIT_PG_CYCLE_TBF ein vorrichtungsspezifischer Parameter ist, welcher bei Zuordnung verhandelt wird; und
IMSI = International Mobile Subscriber Identity bzw. internationale Mobilfunkteilnehmer-Identifizierung.

**9.** Verfahren nach einem der vorhergehenden Ansprüche, **dadurch gekennzeichnet, dass** während eines erweiterten Uplink-Übertragungs-Blockflussmodus das Verfahren des Weiteren die Übertragung von Daten in einem Uplink-Zeitschlitz gemäß einem Uplink-State-Flag-Feld (502) in dem empfangenen zugewiesenen Paging-Block (500) durch die Kommunikationsvorrichtung (300) ansprechend auf den Empfang eines zugewiesenen Paging-Blocks aufweist.

**10.** Verfahren nach Anspruch 9, **dadurch gekennzeichnet, dass** bei Nichtvorhandensein von zu übertragenden Daten die Daten eine Blindsteuerungs-Blocknachricht einschließen.

**11.** Verfahren nach einem der Ansprüche 1 bis 8, **dadurch gekennzeichnet, dass** während eines erweiterten Downlink-Übertragungs-Blockflussmodus das Verfahren des Weiteren die folgenden Schritte aufweist:

Bestimmung, ob ein Downlink-Datenblock in einem empfangenen zugewiesenen Paging-Block gültig ist;
Wechsel des Betriebs der Kommunikationsvorrichtung (300) von dem erweiterten Downlink-Übertragungs-Blockflussmodus zu dem Downlink-Übertragungs-Blockflussmodus ansprechend auf die Bestimmung, dass der Downlink-Datenblock gültig ist, und Beibehaltung der Kommunikationsvorrichtung in dem erweiterten Übertragungs-Blockflussmodus ansprechend auf die Bestimmung, dass der Downlink-Datenblock nicht gültig ist.

12. Verfahren nach einem der vorhergehenden Ansprüche, **dadurch gekennzeichnet, dass** das Verfahren während eines erweiterten Übertragungs-Blockflussmodus des Weiteren die Übertragung von Daten an das drahtlose Kommunikationsnetz (250) durch die Kommunikationsvorrichtung (300) ansprechend auf den Empfang eines zugewiesenen Paging-Blocks aufweist, welcher ein auf einen vorher festgelegten Wert eingestelltes Abfragefeld einschließt.

13. Kommunikationsvorrichtung (300) zur Kommunikation mit einem drahtlosen Kommunikationsnetz (250) während eines erweiterten Übertragungs-Blockflussmodus, wobei die Kommunikationsvorrichtung Folgendes aufweist:

einen Kommunikationsabschnitt (304), welcher zur Bereitstellung einer drahtlosen Kommunikation mit dem drahtlosen Kommunikationsnetz (250) angeordnet ist; und
eine mit dem Kommunikationsabschnitt (304) verbundene Verarbeitungseinheit (302), wobei die Kommunikationsvorrichtung (300) **dadurch gekennzeichnet ist, dass**:

die Verarbeitungseinheit (302) angeordnet ist, während die Kommunikationsvorrichtung in dem erweiterten Übertragungs-Blockflussmodus arbeitet, um nur einen oder mehrere Paging-Blöcke (500) zu überwachen, welche der Kommunikationsvorrichtung für den erweiterten Übertragungs-Blockflussmodus zugeordnet sind, und um den Betriebsmodus der Kommunikationsvorrichtung (300) ansprechend auf den Empfang des zugewiesenen Paging-Blocks (500) und gemäß dem Fall, ob Daten vorhanden sind, welche zwischen der Kommunikationsvorrichtung und dem drahtlosen Kommunikationsnetz (250) übertragen werden sollen (250), zu bestimmen;
wobei die Verarbeitungseinheit (302) des Weiteren derart angeordnet ist, dass sie den Betrieb der Kommunikationsvorrichtung (300) von dem erweiterten Übertragungs-Blockflussmodus in einen Übertragungs-Blockflussmodus ansprechend auf den Empfang eines zugewiesenen Paging-Blocks und wenn keine zu übertragenden Daten vorhanden sind, ändert, und dass sie die Kommunikationsvorrichtung ansprechend auf den Empfang eines zugewiesenen Paging-Blocks und wenn keine zu übertragenden Daten vorhanden sind, in dem erweiterten Übertragungs-Blockflussmodus beibehält.

14. Kommunikationsvorrichtung nach Anspruch 13, **dadurch gekennzeichnet, dass** die Verarbeitungseinheit (302) angeordnet ist, um die Kommunikationsvorrichtung in dem erweiterten Übertragungs-Blockflussmodus zu halten, bis zu übertragende Daten vorhanden sind oder bis eine vorher festgelegte Zeitperiode abgelaufen ist, oder ansprechend auf einen Befehl von dem Netzwerk.

15. Kommunikationsvorrichtung nach Anspruch 14, **dadurch gekennzeichnet, dass** die Verarbeitungseinheit (302) des Weiteren zur Veränderung des Betriebsmodus der Kommunikationsvorrichtung von dem erweiterten Übertragungs-Blockflussmodus in einen Leerlaufmodus bei Ablauf der vorher festgelegten Zeitperiode angeordnet ist.

16. Kommunikationsvorrichtung nach einem der Ansprüche 13 bis 15, **dadurch gekennzeichnet, dass** die Verarbeitungseinheit (302) zur Überwachung der zugewiesenen einen oder mehreren Paging-Blöcke (500) zu vorher festgelegten Zeiten und während anderer Zeiten angeordnet ist, um Bauelemente der Kommunikationsvorrichtung zur Reduzierung des Stromverbrauchs zu deaktivieren.

17. Kommunikationsvorrichtung nach einem der Ansprüche 13 bis 16, **dadurch gekennzeichnet, dass** die Verarbeitungseinheit (302) des Weiteren zur Bestimmung der Zuweisung des einen oder der mehreren Paging-Blöcke (500) zu der Kommunikationsvorrichtung (300) für den erweiterten Übertragungs-Blockflussmodus angeordnet ist.

18. Kommunikationsvorrichtung nach einem der vorhergehenden Ansprüche 13 bis 17, **dadurch gekennzeichnet, dass** der eine oder die mehreren Paging-Blöcke (500) der Kommunikationsvorrichtung (300) zugewiesen werden, indem die folgende Berechnung durchgeführt wird:

$$PAGING\_GROUP\ (0..M\text{-}1) = ((IMSI\ mod1000)\ div\ (KC*N)) * N + (IMSI\ mod\ 1000)\ mod$$
$$N + Max\ ((m*M)\ div\ SPLIT\_PG\_CYCLE,\ m))\ mod\ M$$

für m = 0, ..., Min (M, SPLIT_PG_CYCLE) -1;

wobei:

KC = Anzahl der gemeinsamen Steuerkanäle in der Zelle;
M = Anzahl der auf einem gemeinsamen Steuerkanal "verfügbaren" Paging-Blöcke;
N = 1 für PCCCH
(9-BS_AG_BLKS_RES)*BS_PA_MFRMS für nicht kombinierten CCCH; (3-BS_AG_BLKS_RES)*BS_PA
MFRMS für kombinierten CCCH/SDCCH, SPLIT_PG_CYCLE ein vorrichtungsspezifischer Parameter ist, welcher bei Zuordnung verhandelt wird; und
IMSI = International Mobile Subscriber Identity bzw. internationale Mobilfunkteilnehmer-Identifizierung.

19. Kommunikationsvorrichtung nach einem der Ansprüche 13 bis 17, **dadurch gekennzeichnet, dass** der eine oder die mehreren Paging-Blöcke (500) der Kommunikationsvorrichtung (300) zugewiesen werden, indem die folgende Berechnung durchgeführt wird:

$$PAGING\_GROUP_{(m=0,...,SPLIT\_PG\_CYCLE\_TBF\text{-}1)} = (IMSI[1000]) + Max\ \left(\frac{(m*M)}{SPLIT\_PG\_CYCLE\_TBF}, m\right)\quad [M]$$

wobei:

M = R X S, wobei R die Anzahl verfügbarer Paging-Blöcke und S die Anzahl von Mehrfachrahmen ist,
SPLIT_PG-CYCLE_TBF ein vorrichtungsspezifischer Parameter ist, welcher bei Zuweisung verhandelt wird, und
IMSI = International Mobile Subscriber Identity bzw. internationale Mobilfunkteilnehmer-Identifizierung.

20. Kommunikationsvorrichtung nach einem der Ansprüche 13 bis 19, **dadurch gekennzeichnet, dass** die Kommunikationsvorrichtung während eines erweiterten Uplink-Übertragungs-Blockflussmodus angeordnet ist, um ansprechend auf den Empfang eines zugewiesenen Paging-Blocks Daten in einem Uplink-Zeitschlitz gemäß einem Uplink-State-Flag-Feld (502) in dem empfangenen zugewiesenen Paging-Block zu übertragen.

21. Kommunikationsvorrichtung nach Anspruch 20, **dadurch gekennzeichnet, dass** bei Nichtvorhandensein von zu übertragenden Daten die Daten eine Blindsteuerungs-Blocknachricht (504) einschließen.

22. Kommunikationsvorrichtung nach einem der Ansprüche 13 bis 19, **dadurch gekennzeichnet, dass** die Verarbeitungseinheit (302) während eines erweiterten Downlink-Übertragungs-Blockflussmodus angeordnet ist, um zu bestimmen, ob ein Downlink-Datenblock in einem empfangenen zugewiesenen Paging-Block gültig ist, um den Betrieb der Kommunikationsvorrichtung von dem erweiterten Downlink-Übertragungs-Blockflussmodus in einen Downlink-Übertragungs-Blockflussmodus ansprechend auf die Bestimmung, dass der Downlink-Datenblock gültig ist, zu ändern, und um die Kommunikationsvorrichtung ansprechend auf die Bestimmung, dass der Downlink-Datenblock nicht gültig ist, in dem erweiterten Übertragungs-Blockflussmodus zu halten.

23. Kommunikationsvorraichtung nach einem der Ansprüche 13 bis 22, **dadurch gekennzeichnet, dass** die Kommunikationsvorrichtung (300) während eines erweiterten Übertragungs-Blockflussmodus angeordnet ist, um Daten an das drahtlose Kommunikationsnetzwerk (250) ansprechend auf den Empfang eines zugewiesenen Paging-Blocks (500), welcher ein auf einen vorher festgelegten Wert eingestelltes Abfragefeld einschließt, zu übertragen.

24. Drahtloses Kommunikationssystem, welches Folgendes aufweist:

ein drahtloses Kommunikationsnetz (250); und
eine Kommunikationsvorrichtung (300) nach einem der Ansprüche 13 bis 23 zur Kommunikation mit einem drahtlosen Kommunikationsnetzwerk während eines erweiterten Übertragungs-Blockflussmodus.

**Revendications**

1. Procédé destiné à commander le fonctionnement d'un dispositif de communication (300) en communication avec un réseau de communication sans fil (250), le dispositif de communication (300) étant apte à fonctionner dans un mode de flux de blocs de transfert étendu, le procédé étant **caractérisé en ce qu'**il comporte les étapes ci-dessous consistant à:

   affecter un ou plusieurs blocs de radiomessagerie (500) au dispositif de communication (300) pour le mode de flux de blocs de transfert étendu;
   surveiller uniquement ledit un ou lesdits plusieurs blocs de radiomessagerie affectés (500), par le biais du dispositif de communication, (300) lors du fonctionnement en mode de flux de blocs de transfert étendu; et déterminer le mode de fonctionnement du dispositif de communication en réponse à la réception d'un bloc de radiomessagerie affecté et selon la présence de données à communiquer entre le dispositif de communication (300) et le réseau de communication sans fil (250);
   dans lequel l'étape consistant à déterminer le mode de fonctionnement du dispositif de communication comporte, lorsqu'il existe des données à communiquer (606), l'étape consistant à modifier le fonctionnement du dispositif de communication du mode de flux de blocs de transfert étendu (602) à un mode de flux de blocs de transfert (600) en réponse à la réception d'un bloc de radiomessagerie affecté, et lorsqu'il n'existe pas de données à communiquer (606), maintenir le dispositif de communication dans le mode de flux de blocs de transfert étendu (602) en réponse à la réception d'un bloc de radiomessagerie affecté.

2. Procédé selon la revendication 1, dans lequel le dispositif de communication (300) est maintenu dans le mode de flux de blocs de transfert étendu jusqu'à ce qu'il y ait des données à communiquer ou jusqu'à l'expiration d'une période de temps prédéterminée ou en réponse à une instruction en provenance du réseau de communication sans fil (250).

3. Procédé selon la revendication 2, comportant en outre l'étape consistant à modifier (608) le mode de fonctionnement du dispositif de communication du mode de flux de blocs de transfert étendu à un mode de veille, à l'expiration (604) de la période de temps prédéterminée.

4. Procédé selon l'une quelconque des revendications précédentes, dans lequel l'étape de surveillance inclut l'étape consistant à surveiller ledit un ou lesdits plusieurs blocs de radiomessagerie affectés (500), à des temps prédéterminés, et au cours d'autres temps, l'étape consistant à désactiver des éléments du dispositif de communication (300) en vue de réduire la consommation d'énergie.

5. Procédé selon l'une quelconque des revendications précédentes, dans lequel l'étape d'affectation est mise en oeuvre au cours d'un processus de rattachement.

6. Procédé selon l'une quelconque des revendications précédentes, dans lequel l'étape d'affectation est mise en oeuvre au cours du fonctionnement du dispositif de communication (300).

7. Procédé selon l'une quelconque des revendications précédentes, dans lequel l'étape d'affectation d'un ou de plusieurs blocs de radiomessagerie (500) au dispositif de communication (300) pour le mode de flux de blocs de transfert étendu comporte l'étape consistant à calculer les équations ci-dessous:

```
PAGING_GROUP (0 ... M - 1) =      (((IMSI mod1000) div (KC * N)) * N +

                                  (IMSI mod 1000) mod N + Max ((m * M)

                                  div SPLIT_PG_CYCLE, m)) mod M

                                  pour m = 0, ... , Min (M, SPLIT_PG_CYCLE) -1
```

Où:

   KC= le nombre de canaux de commande communs dans la cellule,
   M = le nombre de blocs de radiomessagerie « disponibles » sur un canal de commande commun,

N = 1 pour le canal PCCCH
(9-BS_AG_BLKS_RES) * BS_PA_MFRMS pour le canal CCCH non combiné
(3-BS_AG_BLKS_RES) * BS_PA_MFRMS pour les canaux CCCH/SDCCH combinés,
SPLIT_PG_CYCLE est un paramètre spécifique au dispositif négocié au moment du rattachement, et
IMSI = l'identité internationale de l'abonné mobile.

**8.** Procédé selon l'une quelconque des revendications 1 à 7, dans lequel l'étape d'affectation d'un ou plusieurs blocs de radiomessagerie (500) au dispositif de communication (300) pour le mode de flux de blocs de transfert étendu comporte l'étape consistant à calculer l'équation ci-dessous:

$$PAGING\_GROUP_{(m=0,...,SPLIT\_PG\_CYCLE\_TBF-1)} = (IMSI[1000]) + Max\left(\frac{(m*M)}{SPLIT\_PG\_CYCLE\_TBF}, m\right) \ [M]$$

Où:

M = R X S, où R est le nombre de blocs de radiomessagerie disponibles et S est le nombre de trames multiples
SPLIT_PG_CYCLE_TBF est un paramètre spécifique au dispositif négocié au moment du rattachement, et
IMSI = l'identité internationale de l'abonné mobile.

**9.** Procédé selon l'une quelconque des revendications précédentes, dans lequel au cours d'un mode de flux de blocs de transfert en liaison montante étendu, le procédé comporte en outre l'étape consistant à transmettre, par le biais du dispositif de communication (300), en réponse à la réception d'un bloc de radiomessagerie affecté, des données dans une tranche de temps en liaison montante selon un champ « Fanion d'étage de liaison montante » (502) dans le bloc de radiomessagerie affecté reçu (500).

**10.** Procédé selon la revendication 9, dans lequel, lorsqu'il n'existe pas de données à communiquer, les données comportent un message de bloc de commande fictif (504).

**11.** Procédé selon l'une quelconque des revendications 1 à 8, dans lequel au cours d'un mode de flux de blocs de transfert en liaison descendante étendu, le procédé comporte en outre les étapes ci-dessous consistant à:

déterminer si un bloc de données en liaison descendante dans un bloc de radiomessagerie affecté reçu est valide;
modifier le fonctionnement du dispositif de communication (300) du mode de flux de blocs de transfert en liaison descendante étendu à un mode de flux de blocs de transfert en liaison descendante en réponse à la détermination que le bloc de données en liaison descendante est valide, et maintenir le dispositif de communication dans le mode de flux de blocs de transfert étendu en réponse à la détermination que le bloc de données en liaison descendante n'est pas valide.

**12.** Procédé selon l'une quelconque des revendications précédentes, dans lequel au cours d'un mode de flux de blocs de transfert étendu, le procédé comporte en outre l'étape consistant à transmettre des données au réseau de communication sans fil (250), par le biais du dispositif de communication (300) en réponse à la réception d'un bloc de radiomessagerie affecté incluant un champ d'invitation à émettre défini sur une valeur prédéterminée.

**13.** Dispositif de communication (300) destiné à communiquer avec un réseau de communication sans fil (250) au cours d'un mode de flux de blocs de transfert étendu, le dispositif de communication comportant:

une section de communication (304) agencée de manière à fournir une communication sans fil avec le réseau de communication sans fil (250); et
une unité de traitement (302) couplée à la section de communication section (304), le dispositif de communication (300) étant **caractérisé en ce que**:

l'unité de traitement (302) est agencée, alors que le dispositif de communication fonctionne en mode de flux de blocs de transfert étendu, de manière à surveiller uniquement un ou plusieurs blocs de radiomessagerie (500) affectés au dispositif de communication pour le mode de flux de blocs de transfert étendu, et à déterminer le mode de fonctionnement du dispositif de communication (300) en réponse à la réception d'un bloc de radiomessagerie affecté (500) et selon qu'il existe ou non des données à communiquer entre le dispositif de communication et le réseau de communication sans fil (250);

dans lequel l'unité de traitement (302) est en outre agencée de manière à modifier le fonctionnement du dispositif de communication (300) du mode de flux de blocs de transfert étendu à un mode de flux de blocs de transfert en réponse à la réception d'un bloc de radiomessagerie affecté et lorsqu'il n'existe pas de données à communiquer, et à maintenir le dispositif de communication en mode de flux de blocs de transfert étendu en réponse à la réception d'un bloc de radiomessagerie affecté et lorsqu'il n'existe pas de données à communiquer.

14. Dispositif de communication selon la revendication 13, dans lequel l'unité de traitement (302) est agencée de manière à maintenir le dispositif de communication en mode de flux de blocs de transfert étendu jusqu'à ce qu'il y ait des données à communiquer ou jusqu'à l'expiration d'une période de temps prédéterminée ou en réponse à une instruction en provenance du réseau.

15. Dispositif de communication selon la revendication 14, dans lequel l'unité de traitement (302) est en outre agencée de manière à modifier le mode de fonctionnement du dispositif de communication du mode de flux de blocs de transfert étendu à un mode de veille à l'expiration de la période de temps prédéterminée.

16. Dispositif de communication selon l'une quelconque des revendications 13 à 15, dans lequel l'unité de traitement (302) est agencée de manière à surveiller ledit un ou lesdits plusieurs blocs de radiomessagerie affectés (500) à des temps prédéterminés, et au cours d'autres temps, à désactiver des éléments du dispositif de communication en vue de réduire la consommation d'énergie.

17. Dispositif de communication selon l'une quelconque des revendications 13 à 16, dans lequel l'unité de traitement (302) est en outre agencée de manière à déterminer l'affectation dudit un ou desdits plusieurs blocs de radiomessagerie (500) au dispositif de communication (300) pour le mode de flux de blocs de transfert étendu.

18. Dispositif de communication selon l'une quelconque des revendications 13 à 17, dans lequel ledit un ou lesdits plusieurs blocs de radiomessagerie (500) sont affectés au dispositif de communication (300) en calculant les équations ci-dessous:

```
PAGING_GROUP (0 ... M - 1) =     (((IMSI mod1000) div (KC * N)) * N +

                                 (IMSI mod 1000) mod N + Max ((m * M)

                                 div SPLIT_PG_CYCLE, m)) mod M

                                 pour m = 0, ... , Min (M, SPLIT_PG_CYCLE) -1
```

Où:

KC= le nombre de canaux de commande communs dans la cellule,
M = le nombre de blocs de radiomessagerie « disponibles » sur un canal de commande commun,
N = 1 pour le canal PCCCH
(9-BS_AG_BLKS_RES) * BS_PA_MFRMS pour le canal CCCH non combiné
(3-BS_AG_BLKS_RES) * BS_PA_MFRMS pour les canaux CCCH/SDCCH combinés;
SPLIT_PG_CYCLE est un paramètre spécifique au dispositif négocié au moment du rattachement, et
IMSI = l'identité internationale de l'abonné mobile.

19. Dispositif de communication selon l'une quelconque des revendications 13 à 17, dans lequel ledit un ou lesdits plusieurs blocs de radiomessagerie (500) sont affectés au dispositif de communication (300) en calculant l'équation ci-dessous:

$$PAGING\_GROUP_{(m=0,...,SPLIT\_PG\_CYCLE\_TBF)} = (IMSI \ 1000) + Max\left(\frac{(m*M)}{SPLIT\_PG\_CYCLE\_TBF}, m\right) \ [M]$$

Où:

M = R X S, où R est le nombre de blocs de radiomessagerie
disponibles et S est le nombre de trames multiples SPLIT_PG_CYCLE_TBF est un paramètre spécifique au dispositif négocié au moment du rattachement; et
IMSI = l'identité internationale de l'abonné mobile.

20. Dispositif de communication selon l'une quelconque des revendications 13 à 19, dans lequel le dispositif de communication est agencé, au cours d'un mode de flux de blocs de transfert en liaison montante étendu, de manière à transmettre, en réponse à la réception d'un bloc de radiomessagerie affecté, des données dans une tranche de temps en liaison montante selon un champ « Fanion d'étage de liaison montante » (502) dans le bloc de radiomessagerie affecté reçu.

21. Dispositif de communication selon la revendication 20, dans lequel lorsqu'il n'existe pas de données à communiquer, les données comportent un message de bloc de commande fictif (504).

22. Dispositif de communication selon l'une quelconque des revendications 13 à 19, dans lequel l'unité de traitement (302) est agencée, au cours d'un mode de flux de blocs de transfert en liaison descendante étendu, de manière à déterminer si un bloc de données en liaison descendante dans un bloc de radiomessagerie affecté reçu est valide, à modifier le fonctionnement du dispositif de communication du mode de flux de blocs de transfert en liaison descendante étendu à un mode de flux de blocs de transfert en liaison descendante en réponse à la détermination que le bloc de données en liaison descendante est valide, et à maintenir le dispositif de communication en mode de flux de blocs de transfert étendu en réponse à la détermination que le bloc de données en liaison descendante n'est pas valide.

23. Dispositif de communication selon l'une quelconque des revendications 13 à 22, dans lequel le dispositif de communication (300) est agencé, au cours d'un mode de flux de blocs de transfert étendu, de manière à transmettre des données au réseau de communication sans fil (250) en réponse à la réception d'un bloc de radiomessagerie affecté (500) incluant un champ d'invitation à émettre défini sur une valeur prédéterminée.

24. Système de communication sans fil comportant:

un réseau de communication sans fil (250); et
un dispositif de communication (300) selon l'une quelconque des revendications 13 à 23 destiné à communiquer avec un réseau de communication sans fil au cours d'un mode de flux de blocs de transfert étendu.

EP 2 076 089 B1

Bit

| 8 | 7 | 6 | 5 | 4 | 3 | 2 | 1 |
|---|---|---|---|---|---|---|---|

2

| Payload Type | RRBP | S/P | USF | | MAC header |
| PR | TFI | | FBI | Octet 1 |
| BSN | | E | Octet 2 |
| Length indicator | M | E | Octet 3 (optional) |
| | | | |
| Length indicator | M | E | Octet M (optional) |
| | Octet M+1 |
| RLC data | Octet N2-1 |
| | Octet N2 |
| spare | spare | (if present) |

FIG. 1

FIG. 2

FIG. 5

OMC

207

205

MSC

200

233

235

SGSN

SGSN

250

201

203

BSC

239

BSC

209

211

227

Base
station

Base
station

Base
station

Base
station

225

217

219

231

213

223

229

215

221

FIG.3

FIG. 4

```
                          ┌─────────┐
                          │  Start  │
                          └────┬────┘
                               │
                               ▼
          ┌──────────────────────────────┐
          │      MS operates             │─── 600
          │      in TBF mode             │
          └──────────────────────────────┘
                               │
                               ▼
          ┌──────────────────────────────┐ ─── 602
          │      MS operates             │
          │      in extended             │◄──────────┐
          │      TBF mode                │           │
          └──────────────────────────────┘           │
                               │                      │
                               ▼                      │
  ┌──────────────────┐   Y  ┌──────────────────────┐  │
  │ Extended TBF mode │◄─────│ Extended TBF mode    │─── 604
  │ Ends             │      │ period expired?      │  │
  └──────────────────┘      └──────────────────────┘  │
     608                              │                │
                                      │ N              │
                                      ▼                │
                          ┌──────────────────┐ ─── 606 │
            Y             │   Data is        │   N     │
       ◄──────────────────│   available?     │─────────┘
                          └──────────────────┘
```

FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1376950 A
- EP 1379033 A
- EP 1613107 A
- US 7020102 B

**Non-patent literature cited in the description**

- 3rd Generation Partnership Project; Technical Specification Group GSM/EDGE Radio Access Network; General Packet Radio Service (GPRS); Overall description of the GPRS radio interface; Stage 2 (Release 7). *3GPP TS 43.064 V7.3.0,* November 2006
- Early TBF establishment. *3GOO TSG-GERAN Meeting #27,* 07 November 2005, http//www.3gpp.org/ftp/tsg_geran/TSG_GERAN/GERAN_27_Atlanta/ Docs